# EUROPEAN PATENT SPECIFICATION

(11) **EP 3 411 428 B1**
(45) Date of publication and mention of the grant of the patent: **09.02.2022**
(21) Application number: 16822596.9
(22) Date of filing: 20.12.2016
(51) Int. Cl.: B29C 48/00, B29C 48/25, C08J 5/18, C08L 23/06, C08L 23/08, B29C 48/10, B29C 48/21

(54) **POLYETHYLENE FILMS AND PROCESSES FOR MAKING THEM**
POLYETHYLENFOLIEN UND VERFAHREN ZUR HERSTELLUNG DAVON
FILMS DE POLYÉTHYLÈNE ET PROCÉDÉS POUR LEUR FABRICATION

(30) Priority: 10.02.2016 US 201662293559 P; 01.04.2016 EP 16163511
(43) Date of publication of application: 12.12.2018
(73) Proprietor: ExxonMobil Chemical Patents Inc., Baytown, TX 77520 (US)
(72) Inventor: WEN, Li, Houston, TX 77059 (US); WANG, Xiao-Chuan, Shanghai, 200135 (CN)
(74) Representative: ExxonMobil Chemical Europe Inc.
(86) International application number: PCT/US2016/067728
(87) International publication number: WO 2017/139032

(56) References cited:
- US-A1- 2003 096 128
- US-A1- 2007 260 016
- US-A1- 2015 232 589

## Description

### FIELD OF THE INVENTION

The present invention generally relates to films made from polyethylene polymers, particularly high-stalk films, and methods for making such films.

### BACKGROUND OF THE INVENTION

Polyethylene polymers and compositions thereof are useful in many applications, such as in films. Polyethylene polymers are typically made from ethylene and a C₃-C₆ α-olefin comonomer with a variety of catalysts systems using Ziegler-Natta catalysts, chrome catalysts, metallocene catalysts, constrained-geometry catalysts, etc., in a variety of platforms including gas-phase processes, solution processes, high pressure tubular processes, slurry processes, etc.

Polyethylene polymers known as ENABLE^{™} mPE available from ExxonMobil Chemical Company, Houston, Texas, offers a desirable combination of polymer film processing advantages and higher alpha olefin (HAO) performance. A good balance of operational stability, extended output, versatility with HAO performance, and resin sourcing simplicity are among the advantageous properties of this family of polyethylene polymers. For example, Serial No. 62/082,896, filed November 21, 2014, discloses a metallocene polyethylene resin having a melt index (I_{2.16}) of 0.2 g/10 min. and a density of 0.916 g/cm³ incorporated in a multi-layer film. Commercial ENABLE^{™} mPE is available with a density range such as 0.920 g/cm³ to 0.935 g/cm³ and melt index (I_{2.16}) range such as 0.3 g/10 min. to 1.0 g/10 min.

References disclosing additional polyethylene polymers include U.S. Patent Nos. 6,255,426, and 7,951,873, and WO Publication Nos. 2004/022646 and 2004/022634.

Polyethylene films are useful in a wide range of applications, such as in packaging films, bags, and liners. In certain applications, high stalk extrusion is desirable as it provides a more balanced orientation, which impacts film properties. There is a need for polyethylene films having balanced shrink performance and improved film properties. In order to maintain a high stalk bubble, frost line, and blow up ratio (BUR), high melt strength polyethylene polymers are particularly useful for high stalk films. The invention provides a polyethylene film that offers a combination of stalk capability, film toughness, high impact and puncture resistance, MD and TD tear strength, balanced MD and TD shrink, good film optics, and desirable sealing performance. For example, films of the invention have a good combination of TD shrink and haze properties, which make them especially useful in various applications, such as in packaging.

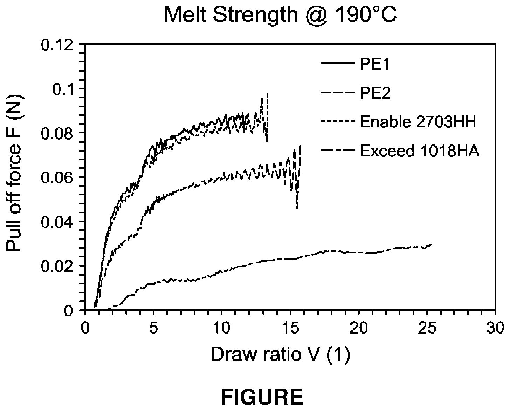

### BRIEF DESCRIPTION OF THE FIGURE

The Figure illustrates the melt strength at 190°C of a polyethylene polymer (PE1, PE2) useful in the films of the invention compared to commercial Enable^{™} 2703HH and Exceed^{™} 1018HA resins.

### SUMMARY OF THE INVENTION

The invention encompasses a film comprising a polyethylene polymer having a melt index (MI) (as measured according to ASTM D1238, Condition E) from 0.1 g/10 min. to 0.5 g/10 min. and a density (as measured by the method provided herein below) from 0.910 g/cm³ to 0.927 g/cm³, and a melt strength (as measured by the method provided herein below) of at least 5 cN at 190°C. Such a film also has the following properties: (a) MD 1% Secant Modulus of less than 400 MPa, (b) Elmendorf Tear MD of at least 3937 g/mm (100 g/mil), (c) Dart drop of at least 7874 g/mm (200 g/mil), (d) puncture resistance break energy (as measured by the method provided herein below) of at least 120 mJ/µm, (d) TD shrink (as measured by the method provided herein below) at 150°C of at least 40% or at least 30% at 120 °C; and (e) haze value (as determined according to ASTM D-1003) of less than 40%.

The invention also encompasses methods for making a film according to the present invention. In method comprises: (a) extruding from a die a polyethylene polymer having a melt index (MI) (as measured according to ASTM D1238, Condition E) from 0.1 g/10 min. to 0.5 g/10 min. and a density (as measured by the method provided herein below) from 0.905 g/cm³ to 0.927 g/cm³ , and a melt strength (as measured by the method provided herein below) of at least 5 cN at 190°C at a neck height that is at least about two times the diameter of the die, and (b) obtaining a film.

### DETAILED DESCRIPTION

The singular forms "a," "an" and "the" include plural referents unless otherwise specified.

### Polyethylene Polymer

The polyethylene polymers are ethylene-based polymers having about 99.0 to about 80.0 wt%, about 99.0 to about 85.0 wt%, about 99.0 to about 87.5 wt%, about 99.0 to about 90.0 wt%, about 99.0 to about 92.5 wt%, about 99.0 to about 95.0 wt%, or about 99.0 to about 97.0 wt%, of polymer units derived from ethylene. Such polymers may have about 1.0 to about 20.0 wt%, about 1.0 to about 15.0 wt%, about 1.0 to about 12.5 wt%, about 1.0 to about 10.0 wt%, about 1.0 to about 7.5 wt%, about 1.0 to about 5.0 wt%, or about 1.0 to about 3.0 wt% of polymer units derived from one or more C₃ to C₂₀ α-olefin comonomers, preferably C₃ to C₁₀ α-olefins, and more preferably C₄ to C₈ α-olefins. The α-olefin comonomer may be linear, branched, cyclic and/or substituted, and two or more comonomers may be used, if desired. Examples of suitable comonomers include propylene, butene, 1-pentene; 1-pentene with one or more methyl, ethyl, or propyl substituents; 1-hexene; 1-hexene with one or more methyl, ethyl, or propyl substituents; 1-heptene; 1-heptene with one or more methyl, ethyl, or propyl substituents; 1-octene; 1-octene with one or more methyl, ethyl, or propyl substituents; 1-nonene; 1-nonene with one or more methyl, ethyl, or propyl substituents; ethyl, methyl, or dimethyl-substituted 1-decene; 1-dodecene; and styrene. Particularly suitable comonomers include 1-butene, 1-hexene, and 1-octene, 1-hexene, and mixtures thereof.

In some embodiments, the polyethylene polymer comprises from about 8 wt% to about 15 wt%, of C₃ to C₁₀ α-olefin derived units, and from about 92 wt% to about 85 wt% ethylene derived units, based upon the total weight of the polymer. In certain embodiments, the polyethylene polymer comprises from about 9 wt% to about 12 wt%, of C₃ to C₁₀ α-olefin derived units, and from about 91 wt% to about 88 wt% ethylene derived units, based upon the total weight of the polymer.

The polyethylene polymers may have a melt index (MI), I_{2.16} or simply I₂ for shorthand according to ASTM D1238, condition E (190°C/2.16 kg) reported in grams per 10 minutes (g/10 min.), of ≥ about 0.15 g/10 min., ≥ about 0.18 g/10 min., ≥ about 0.20 g/10 min., ≥ about 0.22 g/10 min., ≥ about 0.25 g/10 min., or ≥ about 0.28 g/10 min. Additionally, the polyethylene polymers may have a melt index (I_{2.16}) ≤ about 0.30 g/10 min., ≤ about 0.25 g/10 min., ≤ about 0.22 g/10 min., ≤ about 0.20 g/10 min., ≤ about 0.18 g/10 min., or ≤ about 0.15 g/10 min. Ranges expressly disclosed include, but are not limited to, ranges formed by combinations of any of the above-enumerated values, e.g., from about 0.1 to about 0.5 g/10 min., about 0.2 to about 0.5 g/10 min., etc.

The polyethylene polymers may also have a High Load Melt Index (HLMI), I_{21.6} or I₂₁ for shorthand, measured in accordance with ASTM D-1238, condition F (190°C/21.6 kg). For a given polymer having an MI and MIR as defined herein, the HLMI is fixed and can be calculated in accordance with the following paragraph.

The polyethylene polymers may have a Melt Index Ratio (MIR) which is a dimensionless number and is the ratio of the high load melt index to the melt index, or I_{21.6}/I_{2.16} as described above. The MIR of the polyethylene polymers may be from about 25 to about 80, from about 25 to about 60, from about 30 to about 55, or from about 35 to about 50.

The polyethylene polymers may have a density ≥ about 0.912 g/cm³, ≥ about 0.913 g/cm³, ≥ about 0.915 g/cm³, ≥ about 0.916 g/cm³, ≥ about 0.917 g/cm³, ≥ about 0.918 g/cm³, or ≥ about 0.920 g/cm³. Additionally or alternatively, polyethylene polymers may have a density ≤ about 0.916 g/cm³, ≤ about 0.915 g/cm³, or ≤ about 0.914 g/cm³. Ranges expressly disclosed include, but are not limited to, ranges formed by combinations of any of the above-enumerated values, e.g., from about 0.910 g/cm³ to about 0.917 g/cm³, about 0.910 g/cm³ to about 0.914 g/cm³, about 0.915 g/cm³ to about 0.920 g/cm³, about 0.914 g/cm³ to about 0.918 g/cm³, about 0.915 g/cm³ to about 0.917 g/cm³, etc. Density is determined using chips cut from plaques compression molded in accordance with ASTM D-1928 Procedure C, aged in accordance with ASTM D-618 Procedure A, and measured as specified by ASTM D-1505.

The polyethylene polymer has a melt strength of at least 5 cN. The polyethylene polymer preferably has a melt strength of at least 10 cN, or at least 15 cN, and preferably up to 20 cN, when measured at 190°C. The melt strength of a polymer at a particular temperature may be determined with a Gottfert Rheotens Melt Strength Apparatus. To determine the melt strength, a polymer melt strand extruded from the capillary die is gripped between two counter-rotating wheels on the apparatus. The take-up speed is increased at a constant acceleration of 2.4 mm/sec². The maximum pulling force (in the unit of cN) achieved before the strand breaks or starts to show draw-resonance is determined as the melt strength. The temperature of the rheometer is set at 190°C. The capillary die has a length of 30 mm and a diameter of 2 mm. The polymer melt is extruded from the die at a speed of 10 mm/sec. The distance between the die exit and the wheel contact point should be 122 mm.

The polyethylene polymers may be made by any suitable polymerization method including solution polymerization, slurry polymerization, and gas phase polymerization using supported or unsupported catalyst systems, such as a system incorporating a metallocene catalyst.

As used herein, the term "metallocene catalyst" is defined to comprise at least one transition metal compound containing one or more substituted or unsubstituted cyclopentadienyl moiety (Cp) (typically two Cp moieties) in combination with a Group 4, 5, or 6 transition metal, such as, zirconium, hafnium, and titanium. Metallocene catalysts generally require activation with a suitable co-catalyst, or activator, in order to yield an "active metallocene catalyst", i.e., an organometallic complex with a vacant coordination site that can coordinate, insert, and polymerize olefins. Active catalyst systems generally include not only the metallocene complex, but also an activator, such as an alumoxane or a derivative thereof (preferably methyl alumoxane), an ionizing activator, a Lewis acid, or a combination thereof. Alkylalumoxanes (typically methyl alumoxane and modified methylalumoxanes) are particularly suitable as catalyst activators. The catalyst system may be supported on a carrier, typically an inorganic oxide or chloride or a resinous material such as, for example, polyethylene or silica. Zirconium transition metal metallocene-type catalyst systems are particularly suitable. Non-limiting examples of metallocene catalysts and catalyst systems useful in practicing the present invention include those described in, U.S. Patent Nos. 5,466,649, 6,476,171, 6,225,426, and 7,951,873; and in the references cited therein. Particularly useful catalyst systems include supported dimethylsilyl bis(tetrahydroindenyl) zirconium dichloride.

### Second Polyethylene Polymer

The polyethylene polymer can be combined with additional polymers, for example in a blend in a monolayer film or in one or more layers in a multilayer film. In some embodiments, the polyethylene polymer is combined with a second polyethylene polymer, which may have different or overlapping properties such as composition, density, MIR, MI, etc.

For example, the second polyethylene polymer may be a metallocene-catalyzed polyethylene polymer having about 99.0 to about 80.0 wt%, about 99.0 to about 85.0 wt%, about 99.0 to about 87.5 wt%, about 99.0 to about 90.0 wt%, about 99.0 to about 92.5 wt%, about 99.0 to about 95.0 wt%, or about 99.0 to about 97.0 wt%, of polymer units derived from ethylene. The second polyethylene polymer may comprise about 1.0 to about 20.0 wt%, about 1.0 to about 15.0 wt%, about 1.0 to about 12.5 wt%, about 1.0 to about 10.0 wt%, about 1.0 to about 7.5 wt%, about 1.0 to about 5.0 wt%, or about 1.0 to about 30 wt% of polymer units derived from one or more C₃ to C₂₀ α-olefin comonomers, preferably C₃ to C₁₀ α-olefins, and more preferably C₄ to C₈ α-olefins, such as hexene and octene.

The second polyethylene polymer preferably has a melt index, I_{2.16}, according to ASTM D1238 (190°C/2.16 kg), of from about 0.1 to about 2.0 g/10 min., preferably from about 0.1 to about 1.0 g/10 min. Such a polymer can have an MI of ≥ about 0.10 g/10 min., e.g., ≥ about 0.15 g/10 min., ≥ about 0.18 g/10 min., ≥ about 0.20 g/10 min., ≥ about 0.22 g/10 min., ≥ about 0.25 g/10 min., ≥ about 0.28 g/10 min., or ≥ about 0.30 g/10 min. The polymer preferably has a melt index (I_{2.16}) ≤ about 1.50 g/10 min., about 1.00 g/10 min., ≤ about 0.70 g/10 min., ≤ about 0.50 g/10 min., ≤ about 0.40 g/10 min., or ≤ about 0.30 g/10 min. For example, the second polyethylene can have an MI or about 0.10 g/10 min. to about 0.30 g/10 min., about 0.15 g/10 min. to about 0.25 g/10 min., about 0.18 g/10 min. to about 0.22 g/10 min., preferably about 0.25 g/10 min.

The second polyethylene polymer is preferably a low density polyethylene, or LDPE. The LDPE can have a density up to about 0.930 g/cm³, up to about 0.926 g/cm³, up to about 0.924 g/cm³, up to about 0.923 g/cm³, or up to about 0.922 g/cm³. Preferably, the LDPE has a density from about 0.918 g/cm³, or from about 0.919 g/cm³, with preferred ranges combined with the upper limits provided above, for example from about 0.918 g/cm³ to about 0.926 g/cm³, from about 0.918 g/cm³ to about 0.923 g/cm³, or from about 0.918 g/cm³ to about 0.920 g/cm³, preferably about 0.919 g/cm³. Preferably, the second polyethylene polymer has a density from about 0.918 g/cm³ to about 0.930 g/cm³, or from about 0.918 g/cm³ to about 0.920 g/cm³, and an MI of about 0.1 g/ 10 min. to about 2.0 g/10 min., or about 0.1 g/10 min. to about 1.0 g/10 min.

In certain embodiments, the second polyethylene polymer is present in an amount of about 1 to about 30 wt %, based on total weight of the polyethylene polymer and the second polyethylene polymer. For example, the second polyethylene polymer may be present in an amount of ≥ about 1 wt%, ≥ about 5 wt%, or ≥ about 10 wt%, or ≥ about 15 wt%. The polymer preferably is present in an amount ≤ about 30 wt%, ≤ about 25 wt%, ≤ about 20 wt%. In some preferred embodiments, the second polyethylene polymer is present in an amount of about 5 to about 25 wt%, and preferably about 10 to about 20 wt%.

Suitable commercial polymers for the second polyethylene polymer include those available from ExxonMobil Chemical Company, LDPE LD 0.51 low density polyethylene resin.

### Films

The films of the invention comprise the polyethylene polymer described herein, optionally with a second polyethylene polymer or other polymers or additives, and are particularly useful as high stalk films and in applications, such as in packaging.

Film made from polyethylene polymers may have by an averaged 1% secant modulus (M) of from 69 to 414 MPa (10,000 to 60,000 pounds per square inch (psi)), alternatively, from 138 to 276 (20,000 to 40,000 psi), alternatively, from 138 to 241 MPa (20,000 to 35,000 psi), alternatively, from 172 to 241 MPa (25,000 to 35,000 psi), and alternatively, from 193 to 228 MPa (28,000 to 33,000 psi). The averaged 1% secant modulus can be from 70 to 400 MPa, from 100 to 275 MPa, from 100 to 250 MPa, from 150 to 250 MPa, or from 200 to 250 MPa.

In preferred embodiments, the film has a MD 1% Secant Modulus of less than 300 MPa, less than 250 MPa, or less than 200 MPa. For example, the MD 1% Secant Modulus can be from 70 to 400 MPa, from 100 to 300 MPa, from 100 to 275 MPa, from 100 to 250 MPa, from 150 to 250 MPa, from 150 to 200 MPa, from 175 to 200 MPa, or from 200 to 250 MPa.

In preferred embodiments, the film has a TD 1% Secant Modulus of less than 400 MPa, preferably less than 300 MPa, or less than 250 MPa. For example, the TD 1% Secant Modulus can be from 70 to 400 MPa, from 100 to 300 MPa, from 100 to 275 MPa, from 100 to 250 MPa, from 150 to 250 MPa, from 175 to 250, from 150 to 200 MPa, or from 200 to 250 MPa.

The film has an Elmendorf Tear MD of at least 3937 g/mm (100 g/mil), preferably at least 4724 g/mm (120 g/mil), preferably at least 4921 g/mm (125 g/mil), or preferably at least 5118 g/mm (130 g/mil). For example, the Elmendorf Tear MD can be from 3937 to 7874 g/mm (100 to 200 g/mil), from 3837 to 5906 g/mm (100 to 150 g/mil), from 3937 to 5118 g/mm (100 to 130 g/mil), from 4724 to 5118 g/mm (120 to 130 g/mil), or from 4921 to 5118 (125 to 130 g/mil).

The film has a Dart drop at least 7874 g/mm (200 g/mil), preferably at least 9843 g/mm (250 g/mil), preferably at least 11811 g/mm (300 g/mil), preferably at least 15748 g/mm (400 g/mil), preferably at least 17717 g/mm (450 g/mil), and preferably at least 19685 g/mm (500 g/mil). For example, the Dart drop can be from 7874 to 21654 g/mm (200 to 550 g/mil), from 7874 to 15748 g/mm (200 to 400 g/mil), from 9843 to 17717 g/mm (250 to 450 g/mil), from 11811 to 19685 g/mm (300 to 500 g/mil), or from 17717 to 21654 g/mm (450 to 550 g/mil).

Preferably, the film has a TD shrink at 150°C of at least 50%, preferably at least 60%. Preferably, the film has a TD shrink at 130°C of at least 40%, preferably at least 50%, preferably at least 60%. Preferably, the film has a TD shrink at 120°C of at least 30%, preferably at least 40%.

In some preferred embodiments, the film has a combination of the various Dart drop and TD shrink properties set forth herein. For example, the film can have a Dart drop at least 7874 g/mm (200 g/mil), and a TD shrink at 150°C of at least 50%, or a Dart drop at least 9843 g/mm (250 g/mil) and a TD shrink at 130°C of at least 40%, or a Dart drop at least 11811 g/mm (300 g/mil) and a TD shrink at 120°C of at least 30%, etc.

In preferred embodiments, the film has a total MD/TD shrink (*i.e.* sum of the MD shrink and TD shrink) at 150°C of greater than 100%, preferably greater than 110%, preferably greater than 120%, preferably greater than 130%. Preferably, the film has a total MD/TD shrink at 130°C of greater than 100%, preferably greater than 110%, preferably greater than 120%, preferably greater than 130%. Preferably, the film has a total MD/TD shrink at 120°C of greater than 100%, preferably greater than 110%.

In certain embodiments, the film may have a puncture resistance break energy of at least about 120 mJ/µm, preferably at least about 130 mJ/µm, preferably at least about 150 mJ/µm, and preferably at least about 170 mJ/µm. For example, the film may have a puncture resistance break energy of at least 30 in-lb/mil (or at least about 133 mJ/µm), preferably at least 35 in-lb/mil (or at least about 155 mJ/µm), and preferably at least 40 in-lb/mi (or at least about 177 mJ/µm). In such embodiments, the film preferably comprises the polyethylene polymer without a second polyethylene polymer.

In certain embodiments, the film does not contain any polymer other than the polyethylene polymer having a melt index (MI) (190°C/2.16 kg) from about 0.1 g/10 min. to about 2.0 g/10 min. and a density from about 0.905 g/cm³ to about 0.927 g/cm³. In some embodiments, the film consists of, or consists essentially of, the polyethylene polymer.

The films of the invention can embody various combinations of the properties provided herein. For example, in a preferred embodiment, the film has (a) MD 1% Secant Modulus of less than 250 MPa, (b) Elmendorf Tear MD of at least 4724 g/mm (120 g/mil), (c) Dart drop of at least 11811 g/mm (300 g/mil), (d) puncture resistance break energy of at least 150 mJ/µm, and (d) TD shrink at 150 °C of at least 60%.

In certain preferred embodiments, the film has (a) MD 1% Secant Modulus of less than 200 MPa, (b) Elmendorf Tear MD of at least 125 g/mil, (c) Dart drop of at least 400 g/mil, (d) puncture resistance break energy of at least 170 mJ/µm, and (d) TD shrink at 150°C of at least 50%, TD shrink at 130°C of at least 40%, and/or TD shrink at 120°C of at least 30%.

The invention also encompasses methods for making a film. Such a method comprises extruding from a die the polyethylene polymer of the invention (or compositions thereof), and forming a film. Films of the invention are advantageously high stalk films. Such films can be processed at a neck height of at least two times the die diameter, preferably at least four, five, or six times the die diameter. In some embodiments, the neck height is in the range of about 2 to about 12, about 6 to about 10, or about 6 to about 9 times the die diameter.

The films may be formed by any number of well-known extrusion or coextrusion techniques. Films may be unoriented, uniaxially oriented or biaxially oriented. Physical properties of the film may vary depending on the film forming techniques used.

For example, the composition may be extruded in a molten state through an annular die and then blown and cooled to form a tubular, blown film, which can then be axially slit and unfolded to form a flat film. Films of the invention may be unoriented, uniaxially oriented, or biaxially oriented.

One technique for making film structures described above, and for which the polyethylene polymers are particularly suitable, is a high-stalk blown film process. For example, such a process may comprise: (a) providing a polyethylene polymer described herein, and (b) extruding the polyethylene polymer through die (e.g., annular die) to form an extruded tube of molten material. The tube typically has a tube diameter that is same or substantially the same (depending on the polymer being extruded) as the die diameter. While extruding the tube, the tube of molten material expands downstream of the die to form a bubble. The bubble diameter, which is the median diameter measured across the bubble, may exceed the annular die diameter and the tube diameter. The bubble has a frost line which is a visible demarcation line between the molten material and a solid film. The frost line can be located on the bubble at a height of at least about 5 times, about 5 to about 10 times, at least about 10 times, about 10 to about 20 times, or about 20 times the die diameter. Where the frost "line" is a band, the height of the frost line is measured at the midpoint of such a band, and refers to the median height across the bubble. The use of "about" in this instance is intended to capture any minute variations with the visible demarcation line.

The polyethylene polymers are particularly suitable in such processes, and preferably have neck-height-ratio (NHR, neck height/die diameter) of at least about 2, preferably from about 2 to 12, preferably from about 4 to about 12, and more preferably about 6 to about 12. Such polyethylene polymers can also be processed with a blow-up-ratio (BUR, bubble diameter/die diameter) from about 2 to about 8, preferably about 3 to about 8, more preferably about 4 to about 8, and more preferably still about 6 to about 8. Unless otherwise specified, measurements such as height or diameter refer to the median in instances where the measurements vary across the referenced target (e.g., die, bubble, frost line).

The films may be tailored to specific applications by adjusting the thickness, materials and order of the various layers, as well as the additives in each layer.

Multiple layer films may be formed by methods well known in the art. The materials forming each layer may be coextruded through a coextrusion feedblock and die assembly to yield a film with two or more layers adhered together but differing in composition. Coextrusion may be adapted to cast film or blown film processes. Multiple layer films may also be formed by combining two or more single layer films prepared as described above.

### EXAMPLES

The properties cited below were determined in accordance with the following test procedures. Where any of these properties is referenced in the appended claims, it is to be measured in accordance with the specified test procedure.

Where applicable, the properties and descriptions below are intended to encompass measurements in both the machine and transverse directions. Such measurements are reported separately, with the designation "MD" indicating a measurement in the machine direction, and "TD" indicating a measurement in the transverse direction.

Melt strength at 190°C is measured as Rheotens pull force as determined with a Gottfert Rheotens Melt Strength Apparatus. To determine the melt strength, a polymer melt strand extruded from the capillary die is gripped between two counter-rotating wheels on the apparatus. The take-up speed is increased at a constant acceleration of 2.4 mm/sec². The maximum pulling force (in the unit of cN) achieved before the strand breaks or starts to show draw-resonance is determined as the melt strength. The temperature of the rheometer is set at 190°C. The capillary die has a length of 30 mm and a diameter of 2 mm. The polymer melt is extruded from the die at a speed of 10 mm/sec. The distance between the die exit and the wheel contact point should be 122 mm.

Elmendorf Tear (MD, TD), reported in grams (g), was measured as specified by ASTM D-1922.

Haze, reported as a percentage (%), was measured as specified by ASTM D-1003.

Gloss was measured as specified by ASTM D-2457.

1% Secant Modulus, reported as megapascal (MPa), was measured as specified by ASTM D-882.

Tensile strength, reported as megapascal (MPa), was measured ASTM D-882.

Elongation at break, reported as a percentage (%), was measured as specified by ASTM D-882.

Dart drop impact, reported in grams (g), was measured as specified by ASTM D1709, Method A. Puncture was measured by an ExxonMobil method described as follows: A probe puncture energy test was completed using an Instron Universal tester that records a continuous reading of the force (stress) and penetration (strain) curve. A 6 inch by 6 inch (15 cm by 15 cm) film specimen was securely mounted to a compression load cell to expose a test area 4 inches in diameter (10 cm). Two HDPE slip sheets each 2 inches by 2 inches (5 cm by 5 cm) and each approximately 0.25 mils (6.35 µm) thick were loosely placed on the test surface. A ¾ inch (1.875 cm) diameter elongated matte finished stainless steel probe, traveling at a constant speed of 10 inch/minute (35 cm/min) was lowered into the film, and a stress/strain curve was recorded and plotted. The "puncture force" was the maximum force, reported in Newton (N) encountered. The machine was used to integrate the area under the stress/strain curve, which is indicative of the energy consumed during the penetration to rupture testing of the film, and is reported as "puncture energy" in (Joules (J)). The probe penetration distance was not recorded in these tests, unless specifically states to the contrary.

Shrink, reported in percentage (%), is measured in both machine (MD) and transverse (TD) directions in the following way. Round specimens of 50 mm diameter are cut out from film samples and marked with machine or transverse direction. Shrink is measured by reheating the film sample on a horizontal plane at 130°C and 150°C. Silicon oil is applied between the film sample and the heated surface to prevent the samples from sticking to the heating plate and allowing a free shrinkage movement until no further shrinkage is observed. MD and TD shrinkage are then calculated.

The shrink force and contracting force, reported in Newton (N), is measured using a Retramat equipment based on ISO 14616. The method consists in exposing two film samples to a given temperature, during a given time, and to cool them down at room temperature, simulating what happens inside a shrinkage installation. A Retramat equipment is equipped of a heated oven. During the test, one of the samples is connected to a force transducer, while the other is connected to a displacement transducer. A thermocouple allows following up the temperature at a few millimeters from the middle of the sample. The three parameters (force - displacement - temperature) are continuously displayed on the Retramat and recorded on a lab PC. Shrink force is defined as force developed by the film when it reaches the temperature corresponding to that at which the stress was induced at the time of manufacture. Contracting force is defined as force developed by the film during its cooling process. The conditions for the test are: oven heated at 160°C, oven around the sample for 30 seconds.

The Figure illustrates the melt strength (190°C) of polyethylene polymers PE1 and PE2 compared to commercial Enable^{™} 2703HH and Exceed^{™} 1018HA resins. High melt strength allows the polymer to run at typical high stalk (e.g. greater neck height) conditions. Such a high frost line enables the film to achieve balanced film properties by imparting more bi-axial orientation in the film in the transverse direction to match the orientation in the machine direction.

Enable^{™} 2703HH metallocene polyethylene (mPE) resin has an MI of 0.30 g/10 min. and density of 0.927 g/cm³, and is commercially available from ExxonMobil Chemical Company, Houston, Texas.

Exceed^{™} 1018HA metallocene polyethylene (mPE) resin has an MI of 1.0 g/10 min. and density of 0.918 g/cm³, and is commercially available from ExxonMobil Chemical Company, Houston, Texas.

ExxonMobil^{™} LD051.LQ low density polyethylene resin has an MI of 0.25 g/10 min. and density of 0.919 g/cm³, and is commercially available from ExxonMobil Chemical Company, Houston, Texas.

PE1 is a polyethylene polymer used in the inventive films. PE1 was made according to inventive polymers disclosed in Serial No. 62/219,846, filed September 17, 2015, using a solid zirconocene catalyst disclosed in U.S. Patent No. 6,476,171, Col. 7, line 10, bridging Col. 8, line 26, under polymerization conditions to produce an ethylene-hexene copolymer having density of 0.916 g/cm³, a melt index (I_{2.16}) of 0.2 g/ 10 min., and a melt index ratio (I_{21.6}/I_{2.16}) of 50. PE1 had a hexene content of 2.8 mole%, a Mn of 51,730 g/mole, a Mw of 130,893 g/mole and a Mz of 246,400 g/mole. The branching index of PE1, g', is 0.954.

PE2 was made according to PE1 as described above except that the polymerization conditions to produce an ethylene-hexene copolymer varied. The melt index is different between PE1 and PE2 and this difference was obtained by varying the hydrogen during the polymerization process as recognized in the art. The ethylene-hexene copolymer (PE2) had a density of 0.916 g/cm³, a melt index (I_{2.16}) of 0.5 g/ 10 min., and a melt index ratio (I_{21.6}/I_{2.16}) of 37. PE2 had a hexene content of 2.8 mole%, a Mn of 28,984 g/mole, a Mw of 112,688 g/mole, and a Mz of 227,071 g/mole. The branching index of PE2, g', is 0.950.

Example films of the invention (Examples 1-3) and comparative Reference 1 were made on an Alpine I blown film line into monolayer films. Film line setup and processing conditions are shown in Table 1.

| Reference 1 | Enable^{™} 2703HH | 100% |
|---|---|---|
| Example 1 | PE1 | 100% |
| Example 2 | PE1 | 90% |
| | LD051.LQ | 10% |
| Example 3 | PE1 | 80% |
| | LD051.LQ | 20% |

**Table 1. Film Process Conditions**

| | Reference 1 | Example 1 | Example 2 | Example 3 |
|---|---|---|---|---|
| NHR | 3.8 | 7.6 | 8.6 | 9 |
| Die size (mm) | 120 | 120 | 120 | 120 |
| Die gap (mm) | 1.5 | 1.5 | 1.5 | 1.5 |
| BUR | 4.0 | 4.1 | 4.1 | 4.1 |
| Throughput (kg/hr) | 40 | 41 | 44 | 45 |
| Melt T (°C) | 190 | 193 | 163 | 183 |
| Melt P (MPa / psi) | 34.14/4951 | 42.55/6172 | 43.76/6347 | 45.74/6634 |

| Extruder profile (°C) | | | | |
|---|---|---|---|---|
| Zone 1 | 160 | 163 | 164 | 164 |
| Zone 2 | 204 | 219 | 213 | 209 |
| Zone 3 | 205 | 231 | 227 | 224 |
| Zone 4 | 171 | 175 | 173 | 174 |

Properties of the films in Table 1 are shown in Table 2. Film samples, particularly Example 1 containing neat PE1, a polyethylene polymer of the invention, demonstrate low modulus, high impact and puncture resistance, and improved MD and TD tear. Combining PE1 with a low density polyethylene such as LD051.LQ can lead to improved optical properties. As observed at 150°C, MD/TD shrink of 68%/61% was achieved by Example 1 containing neat PE1. Contracting force for Examples 1-3 is notably below 1N, thus making these films a good fit for use in soft shrink applications.

**Table 2. Film Properties**

| | Reference 1 | Example 1 | Example 2 | Example 3 |
|---|---|---|---|---|
| Gauge (µm) | 25 | 27 | 28 | 28 |
| 1% Secant MD (MPa) | 347 | 191 | 203 | 213 |
| 1% Secant TD (MPa) | 391 | 189 | 214 | 232 |
| Tensile Strength MD (kPa / psi) | 427 / 62 | 469 / 68 | 407 / 59 | 324 / 47 |
| Tensile Strength TD (kPa / psi) | 386/56 | 538/78 | 490/71 | 483 / 70 |
| Elongation at Break MD (%) | 560 | 508 | 507 | 451 |

**Table 2. Film Properties (continued)**

| | | | | |
|---|---|---|---|---|
| Elongation at Break TD (%) | 677 | 470 | 507 | 480 |
| Elmendorf Tear MD (g) | 79 | 140 | 144 | 112 |
| Elmendorf Tear TD (g) | 449 | 248 | 377 | 632 |
| Haze (%) | 19.4 | 25.6 | 22 | 18.5 |
| Dart Drop (g) | 188 | 554 | 470 | 278 |
| Puncture Peak Force (N) | 50 | 75 | 57 | 64 |
| Puncture Break Energy (J) | 2.8 | 5.2 | 2.9 | 2.9 |
| Shrink @ 130°C, MD (%) | 73 | 69 | 70 | 70 |
| Shrink @ 130°C, TD (%) | 31 | 56 | 47 | 56 |
| Shrink @ 150°C, MD (%) | 76 | 68 | 72 | 71 |
| Shrink @ 150°C, TD (%) | 38 | 61 | 49 | 57 |
| Shrink force at 160°C, MD (N) | 0.01 | 0.05 | 0.04 | 0.07 |
| Contracting force at 160°C, MD (N) | 0.78 | 0.35 | 0.35 | 0.41 |
| Shrink force at 160°C, TD (N) | not measured | 0.09 | 0.12 | 0.14 |
| Contracting force at 160°C, TD (N) | not measured | 0.39 | 0.32 | 0.40 |

For the sake of brevity, only certain ranges are explicitly disclosed herein. However, ranges from any lower limit may be combined with any upper limit to recite a range not explicitly recited, as well as, ranges from any lower limit may be combined with any other lower limit to recite a range not explicitly recited, in the same way, ranges from any upper limit may be combined with any other upper limit to recite a range not explicitly recited. Additionally, within a range includes every point or individual value between its end points even though not explicitly recited. Thus, every point or individual value may serve as its own lower or upper limit combined with any other point or individual value or any other lower or upper limit, to recite a range not explicitly recited.

While the invention has been described with respect to a number of embodiments and examples, those skilled in the art, having benefit of this disclosure, will appreciate that other embodiments can be devised which do not depart from the scope of the invention as disclosed herein.

## Claims

1. A film comprising a polyethylene polymer having a melt index (MI) (as measured according to ASTM D1238, Condition E) from 0.1 g/10 min. to 0.5 g/10 min., a density (as measured by the method provided in the description) from 0.910 g/cm³ to 0.917 g/cm³ and a melt strength (as measured by the method provided in the description) of at least 5 cN at 190°C, wherein the film has:
(a) MD 1% Secant Modulus (as measured according to ASTM D-882) of less than 400 MPa,
(b) Elmendorf Tear MD (as measured according to ASTM D-1922) of at least 3937 g/mm (100 g/mil),
(c) Dart drop (as measured according to ASTM D-1709, Method A) of at least 7874 g/mm (200 g/mil),
(d) Puncture resistance break energy (as measured by the method provided in the description) of at least 120 mJ/µm,
(e) TD shrink (as measured by the method provided in the description) at 150°C of at least 40% or at least 30% at 120°C, and
(f) Haze value (as measured according to ASTM D-1003) of less than 40%.

2. The film of claim 1, wherein the polyethylene polymer has a melt index ratio (MIR) from 25 to 80.

3. The film of claim 2, wherein the polyethylene polymer has a melt strength of at least 10 cN at 190°C.

4. The film of claim 3, further comprising a second polyethylene polymer having a density from 0.918 g/cm³ to 0.930 g/cm³.

5. The film of claim 4, further comprising a second polyethylene polymer having a density from 0.918 g/cm³ to 0.930 g/cm³ and a melt index (MI) (as measured according to ASTM D1238, Condition E) of 0.1 to 2.0 g/10 min.

6. The film of any one of claims 1 to 5, having a TD shrink at 150°C of at least 50%.

7. The film of any one of claims 1 to 6 having a puncture resistance break energy of at least 130 mJ/µm.

8. A method for making a film as claimed in any one of claims 1 to 7, comprising the steps of:
a. extruding from a die a polyethylene polymer having a melt index (MI) (as measured according to ASTM D1238, Condition E) from 0.1 g/10 min. to 0.5 g/10 min. and a density (as measured by the method provided in the description) from 0.910 g/cm³ to 0.917 g/cm³, and a melt strength (as measured by the method provided in the description) of at least 5 cN at 190°C at a neck height that is at least two times the diameter of the die, and
b. obtaining said film.

## Patentansprüche

1. Folie, umfassend ein Polyethylenpolymer mit einem Schmelzindex (MI) (gemessen nach ASTM D1238, Bedingung E) von 0,1 g/10 Min. bis 0,5 g/10 Min., einer Dichte (gemessen nach dem in der Beschreibung angegebenen Verfahren) von 0,910 g/cm³ bis 0,917 g/cm³ und einer Schmelzfestigkeit (gemessen nach dem in der Beschreibung angegebenen Verfahren) von mindestens 5 cN bei 190°C,
wobei die Folie aufweist:
(a) MD 1% Sekantenmodul (gemessen nach ASTM D-882) von weniger als 400 MPa,
(b) Elmendorf Tear MD (gemessen nach ASTM D-1922) von mindestens 3937 g/mm (100 g/mil),
(c) Dart Drop (gemessen nach ASTM D-1709, Methode A) von mindestens 7874 g/mm (200 g/mil),
(d) Durchstoßenergie (gemessen nach dem in der Beschreibung angegebenen Verfahren) von mindestens 120 mJ/µm,
(e) TD-Schrumpfung (gemessen nach dem in der Beschreibung angegebenen Verfahren) bei 150°C von mindestens 40% oder mindestens 30% bei 120°C und
(f) Trübungswert (gemessen nach ASTM D-1003) von weniger als 40%.

2. Folie nach Anspruch 1, wobei das Polyethylenpolymer ein Schmelzindexverhältnis (MIR) von 25 bis 80 aufweist.

3. Folie nach Anspruch 2, wobei das Polyethylenpolymer eine Schmelzfestigkeit von mindestens 10 cN bei 190°C aufweist.

4. Folie nach Anspruch 3, die ferner ein zweites Polyethylenpolymer mit einer Dichte von 0,918 g/cm3 bis 0,930 g/cm³ umfasst.

5. Folie nach Anspruch 4, die ferner ein zweites Polyethylenpolymer mit einer Dichte von 0,918 g/cm³ bis 0,930 g/cm³ und einem Schmelzindex (MI) (gemessen gemäß ASTM D1238, Bedingung E) von 0,1 bis 2,0 g/10 min umfasst.

6. Folie nach einem der Ansprüche 1 bis 5 mit einer TD-Schrumpfung bei 150°C von mindestens 50%.

7. Folie nach einem der Ansprüche 1 bis 6 mit einer Durchstoßenergie von mindestens 130 mJ/µm.

8. Verfahren zur Herstellung einer Folie nach einem der Ansprüche 1 bis 7, das die folgenden Schritte umfasst:
a. Extrudieren eines Polyethylenpolymers mit einem Schmelzindex (MI) (gemessen gemäß ASTM D1238, Bedingung E) von 0,1 g/10 min. bis 0,5 g/10 min. und einer Dichte (gemessen nach dem in der Beschreibung angegebenen Verfahren) von 0,910 g/cm³ bis 0,917 g/cm³ und einer Schmelzfestigkeit (gemessen nach dem in der Beschreibung angegebenen Verfahren) von mindestens 5 cN bei 190°C bei einer Halshöhe, die mindestens das Zweifache des Durchmessers der Düse beträgt, aus einer Düse und
b. Gewinnen der Folie.

## Revendications

1. Film comprenant un polymère de type polyéthylène possédant un indice de fluidité à chaud (MI) (tel que mesuré selon la norme ASTM D1238, Condition E) de 0,1 g/10 min. à 0,5 g/10 min., une densité (telle que mesurée par le procédé fourni dans la description) de 0,910 g/cm³ à 0,917 g/cm³ et une résistance à l'état fondu (telle que mesurée par le procédé fourni dans la description) d'au moins 5 cN à 190 °C, le film possédant :
(a) un module sécant à 1 % dans le sens machine (tel que mesuré selon la norme ASTM D-882) inférieur à 400 MPa,
(b) une déchirure Elmendorf dans le sens machine (telle que mesurée selon la norme ASTM D-1222) d'au moins 3 937 g/mm (100 g/mil),
(c) une résistance au choc au mouton (telle que mesurée selon la norme ASTM D-1709, méthode A) d'au moins 7 874 g/mm (200 g/mil),
(d) une énergie de rupture de résistance à la perforation (telle que mesurée par le procédé fourni dans la description) d'au moins 120 mJ/µm,
(e) un rétrécissement dans le sens transverse (tel que mesuré par le procédé fourni dans la description) à 150 °C d'au moins 40 % ou d'au moins 30 % à 120 °C, et
(f) une valeur de trouble (telle que mesurée selon la norme ASTM D-1003) inférieure à 40 %.

2. Film selon la revendication 1, le polymère de type polyéthylène possédant un rapport d'indice de fluidité à chaud (MIR) de 25 à 80.

3. Film selon la revendication 2, le polymère de type polyéthylène possédant une résistance à l'état fondu d'au moins 10 cN à 190 °C.

4. Film selon la revendication 3, comprenant en outre un deuxième polymère de type polyéthylène possédant une densité de 0,918 g/cm³ à 0,930 g/cm³.

5. Film selon la revendication 4, comprenant en outre un deuxième polymère de type polyéthylène possédant une densité de 0,918 g/cm³ à 0,930 g/cm³ et un indice de fluidité à chaud (MI) (tel que mesuré selon la norme ASTM D1238, Condition E) de 0,1 à 2,0 g/10 min.

6. Film selon l'une quelconque des revendications 1 à 5, possédant un rétrécissement dans le sens transverse à 150 °C d'au moins 50 %.

7. Film selon l'une quelconque des revendications 1 à 6 possédant une énergie de rupture de résistance à la perforation d'au moins 130 mJ/µm.

8. Procédé pour la fabrication d'un film selon l'une quelconque des revendications 1 à 7, comprenant les étapes de :
a. extrusion à partir d'une matrice d'un polymère de type polyéthylène possédant un indice de fluidité à chaud (MI) (tel que mesuré selon la norme ASTM D1238, Condition E) de 0,1 g/10 min. à 0,5 g/10 min. et une densité (telle que mesurée par le procédé fourni dans la description) de 0,910 g/cm³ à 0,917 g/cm³, et une résistance à l'état fondu (telle que mesurée par le procédé fourni dans la description) d'au moins 5 cN à 190 °C à une hauteur de col qui est au moins deux fois le diamètre de la matrice, et
b. obtention dudit film.
